# EUROPÄISCHE PATENTSCHRIFT

(11) **EP 4 078 916 B1**
(45) Veröffentlichungstag und Bekanntmachung des Hinweises auf die Patenterteilung: **15.11.2023**
(21) Anmeldenummer: 20817290.8
(22) Anmeldetag: 01.12.2020
(51) Int. Cl.: H04L 9/40

(54) **ÜBERTRAGUNG VON SICHERHEITSEINSTELLUNGEN ZWISCHEN EINEM ERSTEN UND EINEM ZWEITEN FELDGERÄT DER AUTOMATISIERUNGSTECHNIK**
TRANSFERRING SECURITY CONFIGURATION FROM A FIRST TO A SECOND AUTOMATION FIELD DEVICE
TRANSFERT DE CONFIGURATION DE SÉCURITÉ D'UN PREMIER À UN DEUXIÈME APPAREIL DE TERRAIN

(30) Priorität: 19.12.2019 DE 102019135268
(43) Veröffentlichungstag der Anmeldung: 26.10.2022
(73) Patentinhaber: Endress+Hauser Process Solutions AG, 4153 Reinach (CH)
(72) Erfinder: EIDMANN, Axel, 79541 Lörrach (DE); SPIELMANN, Benedikt, 4053 Basel (CH); MERKLIN, Simon, 79353 Bahlingen a. K. (DE); ALBER, Thomas, 70567 Stuttgart (DE); PÖSCHMANN, Axel, 4057 Basel (CH)
(74) Vertreter: Trenkle, Dennis
(86) Internationale Anmeldenummer: PCT/EP2020/084086
(87) Internationale Veröffentlichungsnummer: WO 2021/121962

(56) Entgegenhaltungen:
- DE-A1-102016 107 045
- GB-A- 2 403 042
- US-B1- 9 602 279

## Beschreibung

Die Erfindung betrifft ein Verfahren zur Übertragung von Sicherheitseinstellungen zwischen einem ersten Feldgerät der Automatisierungstechnik und einem zweiten Feldgerät der Automatisierungstechnik, wobei das erste Feldgerät und das zweite Feldgerät jeweils zumindest einen Datenspeicher aufweisen, auf welchem Datenspeicher Sicherheitseinstellungen hinterlegt sind, wobei die Sicherheitseinstellungen zumindest ein Bedienerrollenmanagement mit mehreren Berechtigungsgruppen umfasst, wobei eine Berechtigungsgruppe einen Zugriff eines Bedieners auf zumindest eine Bedienfunktionalität und/oder einen Datensatz des jeweiligen Feldgeräts erlaubt, wobei sich die Berechtigungsgruppen in Anzahl und Gestalt der in der jeweiligen Bedienerrollen definierten Bedienfunktionalitäten unterscheiden, wobei eine Administrator-Berechtigungsgruppe vorgesehen ist, welche einen Zugriff auf die Sicherheitseinstellungen des jeweiligen Feldgeräts erlaubt. Des Weiteren betrifft die Erfindung ein Feldgerät und eine Bedieneinheit, welche jeweils zur Verwendung in dem erfindungsgemäßen Verfahren ausgestaltet sind.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Leitsystem-Anwendungen (Siemens PCS7, ABB Symphony, Emerson Delta V) integriert sind. Ebenso ist es möglich, die Bedienprogramme auf einem mobilen Bediengerät auszuführen, um die Feldgeräte mittels dieser zu bedienen.

Auf einem Feldgerät ist eine Vielzahl applikationsspezifischer und nutzerspezifischer Daten vorhanden. Bei diesen handelt es sich beispielsweise um die Konfiguration, bzw. die Parametrierung, welche das Betriebsverhalten, insbesondere das Messverhalten, des Feldgeräts definiert. Weiterhin handelt es sich um Logbücher, bzw. Logdaten, welche beispielsweise Bedieneränderungen an der Konfiguration, bzw. der Parametrierung, festhalten und nachverfolgbar machen.

Des Weiteren weist ein Feldgerät Sicherheitseinstellungen auf. Diese umfassen hauptsächlich verschiedene Bedieneraccounts, welche unterschiedliche Berechtigungsgruppen besitzen. Die Berechtigungsgruppen definieren, welche Aktionen ein Bediener an einem Feldgerät ausführen darf, bzw. welche Aktionen gesperrt sind.

Während prozessnahe Daten, bzw. die Parametrierung, eines Feldgerät schon heute auf ein weiteres Gerät übertragbar ist, ist dies für die Sicherheitseinstellungen aktuell nicht vorgesehen. Heutzutage müssen bei jedem einzelnen Feldgerät manuell Bedieneraccounts angelegt, Berechtigungsgruppen definiert, und die Berechtigungsgruppen einzelnen Bedieneraccounts zugewiesen werden. Dies stellt einen nicht unerheblichen Arbeits- und Zeitaufwand dar. Des Weiteren handelt es sich bei den Sicherheitseinstellungen um sensible Daten, welche aus Sicherheitsgründen nicht von jedermann erstellt, bzw. geändert werden dürfen.

Die US 9 692 279 B1 offenbart ein Verfahren zur Übertragung eines verschlüsselten Sicherheitsprofils von einem ersten Gerät an ein zweites Gerät. Die GB 2 403 042 A offenbart das Übertragen von Parametern eines ersten Geräts auf ein zweites Gerät, beispielsweise mittels eines Speichermediums. Die DE 10 2016 107045 A1 offenbart ein Verfahren, bei welchem ein Feldgerät mittels eines durch einen Server erzeugten Konfigurationstelegramms konfiguriert wird.

Der Erfindung liegt die Aufgabe zugrunde, einen sicheren Transfer von Sicherheitseinstellungen zwischen Feldgeräten der Automatisierungstechnik untereinander zu ermöglichen.

Die Aufgabe wird durch ein Verfahren gemäß Anspruch 1, durch ein Feldgerät der Automatisierungstechnik gemäß Anspruch 11 und durch eine Bedieneinheit gemäß Anspruch 12 gelöst.

Hinsichtlich des Verfahrens ist vorgesehen, dass das Verfahren einer Übertragung von Sicherheitseinstellungen zwischen einem ersten Feldgerät der Automatisierungstechnik und einem zweiten Feldgerät der Automatisierungstechnik dient, wobei das erste Feldgerät und das zweite Feldgerät jeweils zumindest einen Datenspeicher aufweisen, auf welchem Datenspeicher Sicherheitseinstellungen hinterlegt sind, wobei die Sicherheitseinstellungen zumindest ein Bedienerrollenmanagement mit mehreren Berechtigungsgruppen umfasst, wobei eine Berechtigungsgruppe einen Zugriff eines Bedieners auf zumindest eine Bedienfunktionalität und/oder einen Datensatz des Feldgeräts erlaubt, wobei sich die Berechtigungsgruppen in Anzahl und Gestalt der in der jeweiligen Bedienerrollen definierten Bedienfunktionalitäten unterscheiden, wobei eine Administrator-Berechtigungsgruppe vorgesehen ist, welche einen Zugriff auf die Sicherheitseinstellungen des ersten Feldgeräts erlaubt, umfassend:
- Identifizieren und Authentifizieren eines Bedieners mittels einer Bedieneinheit,
   a. Zuweisen einer Berechtigungsgruppe anhand des Identifizierens und Authentifizierens des Bedieners;
   b. Im Falle, dass dem Bediener die Administrator-Berechtigungsgruppe zugewiesen wird:
      i. Verschlüsseln von zumindest einer der Sicherheitseinstellungen, welche in Klartext vorliegt, durch das erste Feldgerät;
      ii. Exportieren der verschlüsselten Sicherheitseinstellung;
      iii. Importieren der verschlüsselten Sicherheitseinstellung auf dem zweiten Feldgerät;
      iv. Entschlüsseln der verschlüsselten Sicherheitseinstellung;
      v. Aufspielen der entschlüsselten Sicherheitseinstellung auf den Datenspeicher des zweiten Feldgeräts und Betreiben des zweiten Feldgeräts mit den aufgespielten Sicherheitseinstellung des ersten Feldgeräts.

Das erfindungsgemäße Verfahren erlaubt eine Übertragung von zumindest einem Teil von Sicherheitseinstellungen eines Feldgeräts auf ein weiteres Feldgerät. Hierbei ist eine Sicherheitsfunktion implementiert: Nur, wenn der Bediener eine entsprechende Administrator-Berechtigungsstufe besitzt, darf er die Sicherheitseinstellung exportieren. Besitzt der Bediener einer geringere Berechtigungsstufe, oder kann er sich nicht authentifizieren, da er beispielsweise ein falsches Kennwort eingibt, bzw. identifizieren, da er beispielsweise keinen Account auf dem Feldgerät besitzt, so ist ein Export nicht möglich.

Als zusätzlicher Sicherheitsfaktor werden die exportierten Sicherheitseinstellungen verschlüsselt, so dass diese nicht im Klartext ausgelesen werden können.

Das erfindungsgemäße Verfahren ist unabhängig des Feldgerätetyps des ersten Feldgeräts und des zweiten Feldgeräts einsetzbar. Die beiden Feldgeräte können auch voneinander verschiedene Feldgerätetypen sein.

Feldgeräte, welche im Zusammenhang mit der Erfindung genannt werden, sind bereits im einleitenden Teil der Beschreibung beispielhaft aufgeführt worden.

Gemäß einer vorteilhaften Ausgestaltung des erfindungsgemäßen Verfahrens ist vorgesehen, dass im Zuge des Verschlüsselns eine Eingabe eines ersten Passworts, bzw. eines ersten Codes, durch den Bediener erfolgt, wobei die zumindest eine in Klartext vorliegende Sicherheitseinstellung mittels des ersten Passworts, bzw. des Codes, verschlüsselt wird, wobei im Zuge des Entschlüsselns eine Eingabe des ersten Passworts, bzw. des ersten Codes, durch den Bediener erfolgt und wobei ein erfolgreiches Entschlüsseln nur bei korrekter Eingabe des ersten Passworts, bzw. des ersten Codes, erfolgt.

Gemäß einer alternativen vorteilhaften Ausgestaltung des erfindungsgemäßen Verfahrens ist vorgesehen, dass im Zuge des Verschlüsselns eine Zufallszahl mit vorgegebener Länge generiert wird, wobei die die in Klartext vorliegende Sicherheitsabfrage mittels des ersten Passworts, bzw. des ersten Codes, und zusätzlich mittels der Zufallszahl verschlüsselt wird, wobei die Zufallszahl der verschlüsselten Sicherheitseinstellung hinzugefügt wird und wobei die Zufallszahl zusätzlich zu dem ersten Passwort, bzw. dem ersten Code, für das Entschlüsseln verwendet wird.

Gemäß einer ersten Variante des erfindungsgemäßen Verfahrens ist vorgesehen, dass als Bedieneinheit eine mobile Bedieneinheit verwendet wird. Als mobile Bedieneinheit wird beispielsweise eine Bedieneinheit im Sinne des von der Anmelderin vertriebenen "Field Xperts" verstanden, aber auch ein PC, ein Laptop, ein mobiles Endgerät wie beispielsweise ein Smartphone oder ein Tablet, oder ein Wearable wie beispielsweise eine Smartwatch oder eine Datenbrille.

Gemäß einer vorteilhaften Ausgestaltung der ersten Variante des erfindungsgemäßen Verfahrens ist vorgesehen, dass die verschlüsselte Sicherheitseinstellung auf die Bedieneinheit exportiert wird, und wobei die verschlüsselte Sicherheitseinstellung von dem zweiten Feldgerät von der Bedieneinheit aus importiert wird. Die Bedieneinheit kann hierfür drahtgebunden mit dem ersten, bzw. dem zweiten Feldgerät, kommunizieren oder alternativ eine drahtlose Kommunikation nach einem der gebräuchlichen Standards, bspw. Bluetooth oder WiFi, mit dem ersten, bzw. dem zweiten Feldgerät, etablieren.

Gemäß einer zweiten Variante des erfindungsgemäßen Verfahrens ist vorgesehen, dass als Bedieneinheit eine in dem ersten Feldgerät integrierte, oder fest mit diesem verbundene Bedieneinheit verwendet wird. Hierbei handelt es sich beispielsweise um ein Bedienterminal, das eine oder mehrere Tast-, bzw. Schalterelemente aufweist und eine Anzeigeeinheit zur Anzeige von Informationen aufweist. Alternativ handelt es sich bei der Bedieneinheit um einen Touchscreen, welcher sowohl zur Eingabe von Bedienkommandos und bspw. Passwörtern, aber auch zur Anzeige von Informationen ausgestaltet ist.

Gemäß einer vorteilhaften Ausgestaltung der zweiten Variante des erfindungsgemäßen Verfahrens ist vorgesehen, dass die verschlüsselte Sicherheitseinstellung auf ein externes Speichermedium exportiert wird, und wobei die verschlüsselte Sicherheitseinstellung von dem zweiten Feldgerät von dem externen Speichermedium aus importiert wird. Hierbei weisen das erste und das zweite Feldgerät entsprechende Schnittstellen auf. Bei dem externen Speichermedium handelt es sich beispielsweise um einen USB-Stick, eine externe Festplatte, eine SD-Karte oder ähnliches.

Gemäß einer vorteilhaften Ausgestaltung des erfindungsgemäßen Verfahrens ist vorgesehen, dass das Identifizieren und Authentifizieren mittels Eingabe einer Bedienerkennung und eines zweiten Passworts, bzw. eines zweiten Codes, vorgenommen wird. Die Eingabe erfolgt dann über die Bedieneinheit. Anstelle des Passworts kann auch vorgesehen sein, dass ein biometrisches Merkmal des Bedieners, bspw. ein Fingerabdruck oder ähnliches, zum Authentifizieren verlangt wird.

Gemäß einer vorteilhaften Ausgestaltung der zweiten Variante des erfindungsgemäßen Verfahrens ist vorgesehen, dass das Identifizieren und Authentifizieren mittels der Bedieneinheit durch Austauschen eines kryptographischen Schlüsselpaars zwischen der Bedieneinheit und dem ersten Feldgerät durchgeführt wird. Zusätzlich kann eine Identifikationsinformation von der Bedieneinheit an das erste Feldgerät übermittelt werden. Nur wenn im Feldgerät eine korrespondierende Identifikationsinformation gespeichert ist, ist das Identifizieren erfolgreich. Diese kann vorab in den Sicherheitseinstellungen hinterlegt werden.

Hinsichtlich des Feldgeräts der Automatisierungstechnik ist vorgesehen, dass dieses zur Verwendung in dem erfindungsgemäßen Verfahren ausgestaltet ist. Das Feldgerät erhält hierfür ein Software-, bzw. Firmwareupdate, damit die jeweiligen Verfahrensschritte (Exportieren und Verschlüsseln) ausführbar sind.

Hinsichtlich der Bedieneinheit ist vorgesehen, dass diese zur Verwendung in dem erfindungsgemäßen Verfahren ausgestaltet ist. Auf der Bedieneinheit wird hierbei ein geeignetes Programm ausgeführt, welches die Ausführung der für die Bedieneinheit relevanten Verfahrensschritte erlaubt.

Die Erfindung wird anhand der nachfolgenden Figur näher erläutert. Es zeigt
- Fig. 1:: ein Ausführungsbeispiel des erfindungsgemäßen Verfahrens;
- Fig. 2:: ein Fließdiagramm zur Veranschaulichung der erfindungsgemäßen Verfahrensschritte.

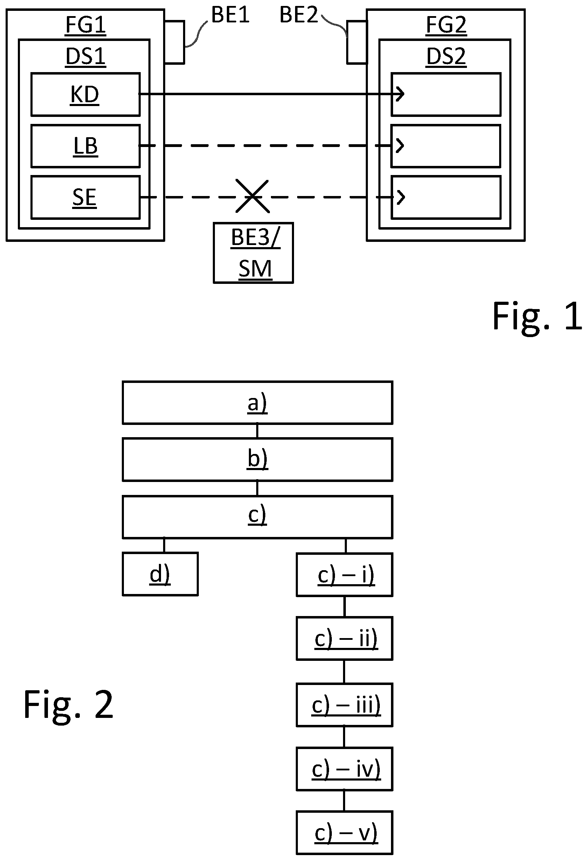

In Fig. 1 ist ein Ausführungsbeispiel des erfindungsgemäßen Verfahrens gezeigt. Hierbei sind zwei Feldgeräte FG1, FG2 abgebildet. Neben Komponenten, welche für den bestimmungsgemäßen Betrieb der Feldgeräte FG1, FG2 bestimmt sind, beispielsweise also Sensoren, bzw. Aktoren, und eine Betriebselektronik, wodurch die Feldgeräte FG1, FG2 zum Erfassen, bzw. Beeinflussen einer physikalischen Größe eines verfahrenstechnischen Prozesse ausgestaltet sind, weisen beide Feldgeräte weisen einen Datenspeicher auf DS1, DS2 auf, welcher für Konfigurationsdaten KD, bzw. Parameterdaten, Logbücher LB, bzw. Logdaten und für Sicherheitseinstellungen SE vorgesehen sein.

Zusätzlich kann jedes der Feldgeräte FG1, FG2 eine Bedieneinheit BE1, BE2 aufweisen, über welche das Feldgerät direkt am Gerät selbst bedient werden kann.

Die Konfigurationsdaten KD lassen sich auf einfachem Wege von einem Feldgerät FG1 exportieren und auf ein anderes Feldgerät FG2 übertragen, bspw. über eine externe Bedieneinheit BE3, bzw. ein externes Speichermedium.

Aus Sicherheitsgründen, da diese Art von Daten sensible Daten, bzw. kritisch für die Anlage sind, können die Sicherheitseinstellungen SE nur von einem berechtigen Bediener unter verschlüsseltem Wege von einem Feldgerät FG1 exportiert und an eines oder mehrere weitere Feldgeräte FG2 übertragen werden. Fig. 2 zeigt ein Fließdiagramm zur Veranschaulichung der hierfür erforderlichen Verfahrensschritte:

In einem ersten Verfahrensschritt a) identifiziert sich ein Bediener gegenüber dem Feldgerät FG1 mittels einer Bedieneinheit BE1, BE3. Hierbei gibt er beispielsweise einen Bedienernamen in die Bedieneinheit BE1, BE3 ein. Bei der Bedieneinheit BE1, BE3 handelt es sich entweder um mobile Bedieneinheit BE3. Als mobile Bedieneinheit wird beispielsweise eine Bedieneinheit BE3 im Sinne des von der Anmelderin vertriebenen "Field Xperts" verstanden, aber auch ein PC, ein Laptop, ein mobiles Endgerät wie beispielsweise ein Smartphone oder ein Tablet, oder ein Wearable wie beispielsweise eine Smartwatch oder eine Datenbrille.

Alternativ handelt es sich bei der Bedieneinheit BE1, BE3 um die in dem ersten Feldgerät FG1 integrierte, oder fest mit diesem verbundene, Bedieneinheit BE3. Durch das Identifizieren wird festgestellt, um welchen Bediener es sich handelt. Zugriff erlangt der Bediener jedoch nur, wenn er sich auch authentifizieren kann. Dies geschieht beispielsweise durch die korrekte Eingabe eines Passworts oder durch Erheben von biometrischen Merkmalen des Bedieners, beispielsweise einem Fingerabdruck.

Im Falle, dass eine mobile Bedieneinheit BE3 verwendet wird, kann das Identifizieren und Authentifizieren alternativ oder zusätzlich auch durch Austauschen eines kryptographischen Schlüsselpaars zwischen der Bedieneinheit BE3 und dem ersten Feldgerät FG1 durchgeführt werden.

Im Falle, dass sich der Bediener erfolgreiche identifizieren und authentifizieren konnte, wird ihm in Verfahrensschritt b) eine Berechtigungsgruppe zugewiesen. Eine Berechtigungsgruppe erlaubt dem Bediener einen Zugriff auf zumindest eine Bedienfunktionalität (beispielsweise ein Parametriervorgang) und/oder einen Datensatz des Feldgeräts FG1. Es existieren mehrere Berechtigungsgruppe, welche sich in der Anzahl und der Gestalt der definierten Bedienfunktionalitäten unterscheiden. Es ist hierbei eine Administrator-Berechtigungsgruppe vorgesehen, welche einem Bediener - neben anderen Funktionen - einen Zugriff auf die Sicherheitseinstellungen SE des Feldgeräts FG1 erlaubt.

Im nachfolgenden Verfahrensschritt c) wird geprüft, ob dem Bediener die Administrator-Berechtigungsgruppe zugewiesen wird. Ist dies nicht der Fall, so hat der Bediener keinen Zugriff auf die Sicherheitseinstellungen SE und kann die folgenden Verfahrensschritte nicht ausführen, das Verfahren ist in Schritt d) beendet.

Wird dem Bediener die Administrator-Berechtigungsgruppe zugewiesen, so wird mit Verfahrensschritt c-i) fortgefahren. In diesem wählt der Bediener eine oder mehrere zu exportierende Sicherheitseinstellungen SE mittels der Bedieneinheit BE1, BE3 aus. Im Feldgerät liegen die Sicherheitseinstellungen SE in Klartext vor. Damit Unbefugte diese Sicherheitseinstellungen SE nicht abfangen und kopieren können, werden diese vor dem Export durch das Feldgerät FG1 verschlüsselt. Der Bediener wird hierfür aufgefordert, ein erstes Passwort, bzw. einen ersten Code, einzugeben. Der Code, bzw. das Passwort, gilt hierbei als Schlüssel, welcher mit den Sicherheitseinstellungen SE gehasht wird. Zusätzlich kann auch eine Zufallszahl mit vorgegebener Länge generiert werden, welche mit dem ersten Code, bzw. Passwort gehasht wird. Die Zufallszahl wird dabei der verschlüsselten Sicherheitseinstellung SE hinzugefügt und im späteren Verlauf mit exportiert und für das spätere Entschlüsseln verwendet.

In dem Verfahrensschritt c-ii) werden die verschlüsselten Sicherheitseinstellungen SE exportiert. Das Format, in welchem die Sicherheitseinstellungen SE verschlüsselt werden, ist hierbei unerheblich; es kann im Prinzip jedes geeignete Dateiformart verwendet werden. Der genaue Exportvorgang unterscheidet sich hierbei entsprechend des Typs der verwendeten Bedieneinheit BE1, BE3:
Handelt es sich bei der Bedieneinheit B1 um eine mit dem Feldgerät FG1 verbundene oder in diesem integrierte Bedieneinheit, so können die Sicherheitseinstellungen auf ein externes Speichermedium, beispielsweise eine SD-Karte oder einen USB-Stick exportiert werden. Das Feldgerät FG1 weist hierfür entsprechende Schnittstellen auf.

Im Falle, dass es sich bei der Bedieneinheit BE3 um eine mobile Bedieneinheit handelt, können die verschlüsselten Sicherheitseinstellungen SE direkt auf diese übertragen werden.

Im Verfahrensschritt c-iii) werden die verschlüsselten Sicherheitseinstellungen SE von dem zweiten Feldgerät FG2 importiert. Der Importvorgang unterscheidet sich auch hier entsprechend der verwendeten Bedieneinheit BE1, BE3.

Im Verfahrensschritt c-iv) werden die verschlüsselten Sicherheitseinstellungen SE entschlüsselt. Hierfür gibt der Bediener dem zum Verschlüsseln verwendeten Code ein. Nur wenn dieser korrekt eingegeben wird, können die Sicherheitseinstellungen SE entschlüsselt werden.

Im finalen Verfahrensschritt c-v) werden die nun entschlüsselten Sicherheitseinstellungen SE in den Datenspeicher DS2 des zweiten Feldgeräts FG2 geschrieben. Das zweite Feldgerät FG2 kann anschließend mit den mit den aufgespielten Sicherheitseinstellungen SE des ersten Feldgeräts FG1 betrieben werden.

### Bezugszeichenliste

- BE1, BE2, BE3: Bedieneinheit
- DS1, DS2: Datenspeicher
- FG1, FG2: Feldgeräte
- KD: Konfigurationsdaten
- LB: Logbücher
- SE: Sicherheitseinstellungen
- SM: Speichermedium
- 1), 2), ...5): Verfahrensschritte

## Patentansprüche

1. Verfahren zur Übertragung von Sicherheitseinstellungen (SE) zwischen einem ersten Feldgerät (FG1) der Automatisierungstechnik und einem zweiten Feldgerät (FG2) der Automatisierungstechnik, wobei das erste Feldgerät (FG1) und das zweite Feldgerät (FG2) jeweils zumindest einen Datenspeicher (DS1, DS2) aufweisen, auf welchem Datenspeicher (DS1, DS2) Sicherheitseinstellungen (SE) hinterlegt sind, wobei die Sicherheitseinstellungen (SE) zumindest ein Bedienerrollenmanagement mit mehreren Berechtigungsgruppen umfasst, wobei eine Berechtigungsgruppe einen Zugriff eines Bedieners auf zumindest eine Bedienfunktionalität und/oder einen Datensatz des jeweiligen Feldgeräts (FG1, FG2) erlaubt, wobei sich die Berechtigungsgruppen in Anzahl und Gestalt der in der jeweiligen Berechtigungsgruppen definierten Bedienfunktionalitäten unterscheiden, wobei eine Administrator-Berechtigungsgruppe vorgesehen ist, welche einen Zugriff auf die Sicherheitseinstellungen (SE) des jeweiligen Feldgeräts (FG1, FG2) erlaubt, umfassend:
a. Identifizieren und Authentifizieren eines Bedieners mittels einer Bedieneinheit (BE1, BE2, BE3);
b. Zuweisen einer Berechtigungsgruppe anhand des Identifizierens und Authentifizierens des Bedieners;
c. Im Falle, dass dem Bediener die Administrator-Berechtigungsgruppe zugewiesen wird:
i. Verschlüsseln von zumindest einer der Sicherheitseinstellungen (SE), welche in Klartext vorliegt, durch das erste Feldgerät (FG1);
ii. Exportieren der verschlüsselten Sicherheitseinstellung (SE);
iii. Importieren der verschlüsselten Sicherheitseinstellung (SE) auf dem zweiten Feldgerät (FG2);
iv. Entschlüsseln der verschlüsselten Sicherheitseinstellung (SE);
v. Aufspielen der entschlüsselten Sicherheitseinstellung (SE) auf den Datenspeicher (DS2) des zweiten Feldgeräts (FG2) und Betreiben des zweiten Feldgeräts (FG2) mit den aufgespielten Sicherheitseinstellung (SE) des ersten Feldgeräts (FG1).

2. Verfahren nach Anspruch 1, wobei im Zuge des Verschlüsselns eine Eingabe eines ersten Passworts, bzw. eines ersten Codes, durch den Bediener erfolgt, wobei die zumindest eine in Klartext vorliegende Sicherheitseinstellung (SE) mittels des ersten Passworts, bzw. des Codes, verschlüsselt wird, wobei im Zuge des Entschlüsselns eine Eingabe des ersten Passworts, bzw. des ersten Codes, durch den Bediener erfolgt und wobei ein erfolgreiches Entschlüsseln nur bei korrekter Eingabe des ersten Passworts, bzw. des ersten Codes, erfolgt.

3. Verfahren nach Anspruch 1, wobei im Zuge des Verschlüsselns eine Zufallszahl mit vorgegebener Länge generiert wird, wobei die die in Klartext vorliegende Sicherheitsabfrage mittels des ersten Passworts, bzw. des ersten Codes, und zusätzlich mittels der Zufallszahl verschlüsselt wird, wobei die Zufallszahl der verschlüsselten Sicherheitseinstellung (SE) hinzugefügt wird und wobei die Zufallszahl zusätzlich zu dem ersten Passwort, bzw. dem ersten Code, für das Entschlüsseln verwendet wird.

4. Verfahren nach zumindest einem der vorherigen Ansprüche 1, wobei als Bedieneinheit (BE3) eine mobile Bedieneinheit verwendet wird.

5. Verfahren nach Anspruch 4, wobei die verschlüsselte Sicherheitseinstellung (SE) auf die Bedieneinheit exportiert wird, und wobei die verschlüsselte Sicherheitseinstellung (SE) von dem zweiten Feldgerät (FG2) von der Bedieneinheit aus importiert wird.

6. Verfahren nach zumindest einem der Ansprüche 1 bis 4, wobei als Bedieneinheit (BE1, BE2) eine in dem ersten Feldgerät (FG1) integrierte, oder fest mit diesem verbundene Bedieneinheit verwendet wird.

7. Verfahren nach Anspruch 6, wobei die verschlüsselte Sicherheitseinstellung (SE) auf ein externes Speichermedium exportiert wird, und wobei die verschlüsselte Sicherheitseinstellung (SE) von dem zweiten Feldgerät (FG2) von dem externen Speichermedium (SM) aus importiert wird.

8. Verfahren nach zumindest einem der vorherigen Ansprüche, wobei das Identifizieren und Authentifizieren mittels Eingabe einer Bedienerkennung und eines zweiten Passworts, bzw. eines zweiten Codes, vorgenommen wird.

9. Verfahren nach zumindest einem der Ansprüche 4 oder 5, wobei das Identifizieren und Authentifizieren mittels der Bedieneinheit (BE3) durch Austauschen eines kryptographischen Schlüsselpaars zwischen der Bedieneinheit und dem ersten Feldgerät (FG1) durchgeführt wird.

10. Feldgerät (FG1, FG2) der Automatisierungstechnik, welches zur Verwendung in einem Verfahren gemäß der Ansprüche 1 bis 9 ausgestaltet ist.

11. Bedieneinheit, welche zur Verwendung in einem Verfahren gemäß der Ansprüche 1 bis 19 ausgestaltet ist.

## Claims

1. A method for transmitting security settings (SE) between a first automation technology field device (FG1) and a second automation technology field device (FG2), wherein the first field device (FG1) and the second field device (FG2) each have at least one memory (DS1, DS2), with security settings (SE) being saved on said memory (DS1, DS2), wherein the security settings (SE) comprise at least one operator role management function with multiple authorization groups, wherein an authorization group permits an operator to access at least one operating functionality and/or a data record of the relevant field device (FG1, FG2), wherein the authorization groups differ in terms of the number and structure of the operating functionalities defined in each authorization group, wherein an administrator authorization group is provided which permits access to the security settings (SE) of the relevant field device (FG1, FG2), comprising:
a. Identifying and authenticating an operator by means of an operating unit (BE1, BE2, BE3);
b. Assigning an authorization group based on the identification and authentication of the operator;
c. In the event that the administrator authorization group is assigned to the operator:
i. Encrypting at least one of the plain-text security settings (SE) by the first field device (FG1);
ii. Exporting the encrypted security setting (SE);
iii. Importing the encrypted security setting (SE) onto the second field device (FG2);
iv. Decrypting the encrypted security setting (SE);
v. Loading the decrypted security setting (SE) onto the memory (DS2) of the second field device (FG2) and operating the second field device (FG2) with the security setting (SE) that was loaded from the first field device (FG1).

2. The method as claimed in claim 1, wherein during encryption the operator enters a first password or a first code, wherein the at least one plain-text security setting (SE) is encrypted using the first password or the code, wherein during decryption the operator enters the first password or the first code, and wherein decryption is only successful if the first password or the first code is entered correctly.

3. The method as claimed in claim 1, wherein during encryption a random number of a prespecified length is generated, wherein the plain-text security prompt is encrypted using the first password or the first code, and additionally by means of the random number, wherein the random number is added to the encrypted security setting (SE) , and wherein the random number is used for decryption alongside the first password or the first code.

4. The method as claimed in at least one of the preceding claims, wherein a mobile operating unit is used as the operating unit (BE3).

5. The method as claimed in claim 4, wherein the encrypted security setting (SE) is exported onto the operating unit, and wherein the encrypted security setting (SE) is imported from the operating unit by the second field device (FG2).

6. The method as claimed in at least one of claims 1 to 4, wherein an operating unit integrated into the first field device (FG1), or permanently connected to it, is used as the operating unit (BE1, BE2).

7. The method as claimed in claim 6, wherein the encrypted security setting (SE) is exported onto an external storage medium, and wherein the encrypted security setting (SE) is imported from the external storage medium (SM) by the second field device (FG2).

8. The method as claimed in at least one of the preceding claims, wherein identification and authentication are performed by entering an operator ID and a second password or a second code.

9. The method as claimed in at least one of claims 4 or 5, wherein the identification and authentication by means of the operating unit (BE3) are performed by exchanging a cryptographic pair of keys between the operating unit and the first field device (FG1).

10. An automation technology field device (FG1, FG2) which is configured to be used in a method as claimed in claims 1 to 9.

11. An operating unit which is configured to be used in a method as claimed in one of claims 1 to 9.

## Revendications

1. Procédé destiné à la transmission de réglages de sécurité (SE) entre un premier appareil de terrain (FG1) de la technique d'automatisation et un deuxième appareil de terrain (FG2) de la technique d'automatisation, le premier appareil de terrain (FG1) et le deuxième appareil de terrain (FG2) présentant chacun au moins une mémoire de données (DS1, DS2), mémoire de données (DS1, DS2) dans laquelle sont déposés des réglages de sécurité (SE), les réglages de sécurité (SE) comprenant au moins une gestion des rôles d'opérateur avec plusieurs groupes d'autorisation, un groupe d'autorisation permettant un accès d'un opérateur à au moins une fonctionnalité de commande et/ou un jeu de données de l'appareil de terrain (FG1, FG2) respectif, les groupes d'autorisation se différenciant par le nombre et la forme des fonctionnalités de commande définies dans les groupes d'autorisation respectifs, un groupe d'autorisation d'administrateur étant prévu, lequel permet un accès aux réglages de sécurité (SE) de l'appareil de terrain (FG1, FG2) respectif, lequel procédé comprend les étapes suivantes :
a. Identification et authentification d'un opérateur au moyen d'une unité de commande (BE1, BE2, BE3) ;
b. Attribution d'un groupe d'autorisation sur la base de l'identification et de l'authentification de l'opérateur ;
c. Dans le cas où l'opérateur se voit attribuer le groupe d'autorisation d'administrateur :
i. Cryptage par le premier appareil de terrain (FG1) d'au moins un des réglages de sécurité (SE), lequel réglage est présent en texte clair ;
ii. Exportation du paramètre de sécurité (SE) crypté ;
iii. Importation du paramètre de sécurité (SE) crypté sur le deuxième appareil de terrain (FG2) ;
iv. Décryptage du réglage de sécurité (SE) crypté ;
v. Enregistrement du réglage de sécurité (SE) décrypté dans la mémoire de données (DS2) du deuxième appareil de terrain (FG2) et exploitation du deuxième appareil de terrain (FG2) avec le réglage de sécurité (SE) enregistré du premier appareil de terrain (FG1).

2. Procédé selon la revendication 1,
pour lequel, au cours du cryptage, une entrée d'un premier mot de passe, ou d'un premier code, est effectuée par l'utilisateur, l'au moins un réglage de sécurité (SE) présent en texte clair étant crypté au moyen du premier mot de passe, ou du code,
pour lequel, au cours du décryptage, une entrée du premier mot de passe, ou du premier code, est effectuée par l'utilisateur et un décryptage réussi n'ayant lieu que si le premier mot de passe, ou le premier code, est entré correctement.

3. Procédé selon la revendication 1, pour lequel un nombre aléatoire de longueur prédéfinie est généré au cours du cryptage, l'interrogation de sécurité présente en texte clair étant cryptée au moyen du premier mot de passe, ou du premier code, et en plus au moyen du nombre aléatoire, le nombre aléatoire étant ajouté au réglage de sécurité crypté (SE) et le nombre aléatoire étant utilisé en plus du premier mot de passe, ou du premier code, pour le décryptage.

4. Procédé selon au moins l'une des revendications précédentes, pour lequel on utilise comme unité de commande (BE3) une unité de commande mobile.

5. Procédé selon la revendication 4,
pour lequel le réglage de sécurité (SE) crypté est exporté vers l'unité de commande, et
pour lequel le réglage de sécurité (SE) crypté est importé par le deuxième appareil de terrain (FG2) à partir de l'unité de commande.

6. Procédé selon au moins l'une des revendications 1 à 4, pour lequel on utilise comme unité de commande (BE1, BE2) une unité de commande intégrée dans le premier appareil de terrain (FG1), ou laquelle unité est reliée de façon fixe audit appareil.

7. Procédé selon la revendication 6,
pour lequel le réglage de sécurité (SE) crypté est exporté vers un support de stockage externe, et
pour lequel le réglage de sécurité (SE) crypté est importé par le deuxième appareil de terrain (FG2) à partir du support de stockage externe (SM).

8. Procédé selon au moins l'une des revendications précédentes, pour lequel l'identification et l'authentification sont effectuées au moyen de la saisie d'un identifiant d'opérateur et d'un deuxième mot de passe, ou d'un deuxième code.

9. Procédé selon au moins l'une des revendications 4 ou 5, pour lequel l'identification et l'authentification sont réalisées au moyen de l'unité de commande (BE3) par échange d'une paire de clés cryptographiques entre l'unité de commande et le premier appareil de terrain (FG1).

10. Appareil de terrain (FG1, FG2) de la technique d'automatisation, lequel appareil est conçu pour être utilisé dans un procédé selon les revendications 1 à 9.

11. Unité de commande, laquelle est conçue pour être utilisée dans un procédé selon les revendications 1 à 9.
